# DEMANDE DE BREVET EUROPEEN

(11) **EP 2 375 225 A1**
(43) Date de publication de la demande: **12.10.2011**
(21) Numéro de dépôt: 10305376.5
(22) Date de dépôt: 12.04.2010
(51) Int. Cl.: G01F 15/06

(54) **Dispositif de connexion d'un dispositif hydraulique et d'un dispositif électronique**

(71) Demandeur: Itron France, 92100 Boulogne-Billancourt (FR)
(72) Inventeur: Cros, Alain, 71680, Crêches sur Saône (FR)
(74) Mandataire: Lenne, Laurence

(57) **Abrégé**

L'invention concerne un dispositif de connexion d'un dispositif hydraulique (1) et d'un dispositif électronique (2) comprenant un câble électrique contenu dans un dispositif de protection constitué d'un élément tubulaire étanche.

Selon l'invention, ledit élément tubulaire est constitué d'un élément flexible (3)

## Description

L'invention concerne un dispositif de connexion d'un dispositif hydraulique et d'un dispositif électronique.

Comme décrit dans le document de brevet WO 00/57143, un dispositif hydraulique constitué d'un dispositif de mesure du débit d'un fluide, en particulier d'eau, dans un système de conduite est constitué de façon à émettre un signal de commande et de régulation au moyen d'un capteur intégré dans le dispositif de mesure. Les signaux sont transmis à un dispositif électronique de comptage qui est connecté au capteur au moyen d'un câble électrique par exemple enfichable dans le capteur.

L'invention concerne cette connexion au moyen d'un câble du dispositif hydraulique, tel qu'un compteur d'eau, et d'un dispositif électronique, en général de comptage.

Ce câble peut être directement monté entre les deux dispositifs, sans protection. Cette solution n'est pas satisfaisante, car le câble peut être endommagé lors de son installation ou une fois installé. Par ailleurs, sa connexion au dispositif électronique peut donner lieu à une entrée d'eau préjudiciable au bon fonctionnement de ce dernier.

Le câble peut être disposé dans un tube rigide qui assure alors sa protection mécanique et son étanchéité. Cependant, une telle installation nécessite un espace relativement important autour du dispositif hydraulique suite à la dimension fixe du tube. Cette solution pose donc un problème d'encombrement.

L'invention résout ces problèmes en proposant un dispositif de connexion qui assure la protection du câble, tout en assurant une grande liberté de positionnement du dispositif électronique résolvant le problème d'encombrement.

Pour ce faire, l'invention propose un dispositif de connexion d'un dispositif hydraulique et d'un dispositif électronique comprenant un câble électrique contenu dans un dispositif de protection constitué d'un élément tubulaire étanche, caractérisé en ce que ledit élément tubulaire est constitué d'un élément flexible.

Une telle solution supprime tout effort de tension sur le câble qui est librement contenu dans l'élément tubulaire.

Selon un mode de réalisation préféré, ledit élément tubulaire est en métal.

Avantageusement, ledit élément tubulaire est en acier inoxydable, ce qui assure également une protection contre des agents chimiques.

Cet élément tubulaire peut également être en matière plastique.

De préférence, ledit élément tubulaire est un tuyau flexible sanitaire standard.

L'emploi d'un tel tuyau sanitaire standard permet de réaliser la connexion de façon particulièrement économique.

Avantageusement, ledit élément tubulaire est un tuyau flexible autoportant.

Cette solution facilite le réglage de positionnement relatif du dispositif électronique par rapport au dispositif hydraulique.

L'invention concerne également un compteur de fluide, en particulier d'eau, connecté à un dispositif électronique au moyen d'un tel dispositif de connexion.

L'invention est décrite ci-après plus détail à l'aide d'une figure ne représentant qu'un mode de réalisation préféré.

Cette figure représente un dispositif hydraulique et un dispositif électronique équipé d'un dispositif de connexion conforme à l'invention.

Ce dispositif de connexion d'un dispositif hydraulique 1 et d'un dispositif électronique 2 comprend un câble électrique contenu dans un dispositif de protection constitué d'un élément tubulaire étanche flexible 3, de préférence en acier inoxydable.

Le dispositif hydraulique est un compteur de fluide 1 ou simplement la partie mesurante d'un débitmètre, en particulier d'eau, relié à une conduite d'entrée 1A et à une conduite de sortie 1B.

De préférence, cet élément tubulaire 3 est un tuyau flexible sanitaire standard, par exemple à ondulations ou anneaux articulés de type flexible de douche.

Cet élément tubulaire 3 est connecté de façon étanche au dispositif hydraulique 1, dans ce cas un compteur d'eau, et au dispositif électronique 2 de comptage associé. Cette connexion peut être réalisée par moulage, vissage, soudage, sertissage ou au moyen d'une partie de raccord séparée.

De préférence, l'élément tubulaire 3 est un tuyau flexible autoportant. Par autoportant, il est ici entendu que le tube assure en soi une stabilité. Il peut être également extensible. Il s'agit par exemple d'un élément tubulaire flexible et extensible tel que décrit dans le document de brevet EP 0 813 014. Un tel élément est métallique, de préférence en acier inoxydable, et sa forme en accordéon permet de le courber et de l'allonger facilement.

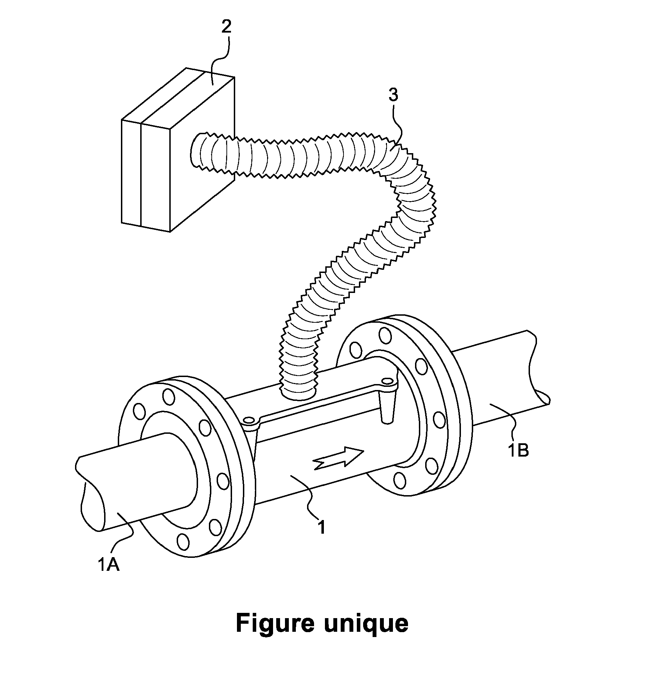

## Revendications

1. Dispositif de connexion d'un dispositif hydraulique (1) et d'un dispositif électronique (2) comprenant un câble électrique contenu dans un dispositif de protection constitué d'un élément tubulaire étanche, **caractérisé en ce que** ledit élément tubulaire est constitué d'un élément flexible (3).

2. Dispositif selon la revendication 1, **caractérisé en ce que** ledit élément tubulaire (3) est en métal.

3. Dispositif selon la revendication 2, **caractérisé en ce que** ledit élément tubulaire (3) est en acier inoxydable.

4. Dispositif selon l'une des revendications précédente, **caractérisé en ce que** ledit élément tubulaire (3) est un tuyau flexible sanitaire standard.

5. Dispositif selon l'une des revendications précédente, **caractérisé en ce que** ledit élément tubulaire (3) est un tuyau flexible autoportant.

6. Compteur de fluide (1), en particulier d'eau, connecté à un dispositif électronique (2) au moyen d'un dispositif de connexion selon l'une des revendications précédentes.

## Revendications modifiées

### Revendications modifiées conformément à la règle 137(2) CBE.

**1.** Agencement de compteur de fluide (1), en particulier d'eau, associé à un dispositif électronique (2) connecté au moyen d'un dispositif de connexion comprenant un câble électrique contenu dans un dispositif de protection constitué d'un élément tubulaire étanche, **caractérisé en ce que** ledit élément tubulaire est constitué d'un élément flexible (3).

**2.** Agencement selon la revendication 1, **caractérisé en ce que** ledit élément tubulaire (3) est en métal.

**3.** Agencement selon la revendication 2, **caractérisé en ce que** ledit élément tubulaire (3) est en acier inoxydable.

**4.** Agencement selon l'une des revendications précédente, **caractérisé en ce que** ledit élément tubulaire (3) est un tuyau flexible sanitaire standard.

**5.** Agencement selon l'une des revendications précédente, **caractérisé en ce que** ledit élément tubulaire (3) est un tuyau flexible autoportant.

**6.** Agencement selon l'une des revendications précédente, **caractérisé en ce que** ledit dispositif électronique (2) est un dispositif de comptage.
